# EUROPÄISCHE PATENTSCHRIFT

(11) **EP 2 921 350 B1**
(45) Veröffentlichungstag und Bekanntmachung des Hinweises auf die Patenterteilung: **13.12.2017**
(21) Anmeldenummer: 14004342.3
(22) Anmeldetag: 20.12.2014
(51) Int. Cl.: B60R 1/00

(54) **Kamerabasiertes Fahrerassistenzsystem eines Zugfahrzeugs, insbesondere eines Zugfahrzeugs eines Nutzfahrzeuggespanns**
Camera-based driver assistance system for a traction vehicle, in particular of a traction vehicle of a combination of commercial vehicles
Système d'assistance à la conduite basé sur une caméra d'un véhicule tracteur, en particulier d'un véhicule tracteur d'un attelage de véhicule utilitaire

(30) Priorität: 20.03.2014 DE 102014003953
(43) Veröffentlichungstag der Anmeldung: 23.09.2015
(73) Patentinhaber: MAN Truck & Bus AG, 80995 München (DE)
(72) Erfinder: Römersperger, Xaver, 84453 Mühldorf (DE); Dörner, Karlheinz, 85757 Karlsfeld (DE); Schwertberger, Walter, 82278 Althegnenberg (DE); Kraus, Sven, 85748 Garching (DE); Reule, Michael, 85354 Freising (DE)
(74) Vertreter: Liebl, Thomas

(56) Entgegenhaltungen:
- US-A1- 2009 236 825
- US-A1- 2010 096 203
- US-A1- 2013 226 390

## Beschreibung

Die Erfindung betrifft ein kamerabasiertes Fahrerassistenzsystem eines Zugfahrzeugs, insbesondere eines Zugfahrzeugs eines Nutzfahrzeuggespanns, nach dem Oberbegriff des Anspruchs 1.

Allgemein bekannt sind Rückfahrkameras, die mittels rückwärtig am Fahrzeug angebrachter Videokameras einem Fahrer über ein Display den Rückraum des Fahrzeugs als Videobild anzeigen, so dass dieser kritische Rückfahrsituationen, insbesondere durch Hindernisse und Personen deutlich erkennen kann. Diese Systeme beschränken sich allerdings auf eine reine Anzeige des Videobildes.

Weiter sind aus dem PKW-Bereich Einparkhilfen allgemein bekannt, die dem Fahrer auf einem Display eine Isttrajektorie des Fahrzeugs bei dem aktuell eingestellten Lenkradwinkel anzeigt.

Bei einem Ankoppelvorgang müssen nach einer Rückwärtsfahrt, die Ankoppelvorrichtungen am Zugfahrzeug und Anhänger/Auflieger zueinander finden und eingreifen. Der Fahrer eines Zugfahrzeugs kann dazu eine geeignete Ankoppel-Trajektorie nur abschätzen. Auch für langjährig erfahrene Fahrer ist ein Ankoppelvorgang ein schwieriges Fahrmanöver, das regelmäßig aufwendige Rangierkorrekturen erfordert. Die Druckschrift US 2009/0236825 A1 offenbart ein kamerabasiertes Fahrerassistenzsystem nach dem Oberbegriff des Anspruchs 1.

Aufgabe der Erfindung ist es, ein kamerabasiertes Fahrerassistenzsystem eines Zugfahrzeugs, insbesondere eines Zugfahrzeugs eines Nutzfahrzeuggespanns so weiterzubilden, das einen Fahrer eines Zugfahrzeugs beim Ankoppeln eines Anhängers oder Sattelauflegers unterstützt.

Diese Aufgabe wird dadurch gelöst, dass das Fahrerassistenzsystem als Ankoppel-Assistenzsystem ausgebildet ist und zur Unterstützung eines Ankoppelvorgangs mit wenigstens einer Kamera ein hinter dem Zugfahrzeug abgestellter Anhänger/Auflieger mit der Lage seiner Ankoppelvorrichtung erfasst wird. Durch Auswertung des Videobildmaterials mittels Bildverarbeitungsalgorithmen wird eine optimale Ankoppel-Trajektorie als optimale Solltrajektorie zwischen Zugfahrzeug und Anhänger/Auflieger berechnet. Das Assistenzsystem teilt dem Fahrer eine solche optimale Solltrajektorie und/oder notwendige Lenkbewegungen zur Einhaltung der Solltrajektorie mit und/oder führt dazu gegebenenfalls selbsttätige Lenkeingriffe aus.

Vorteilhaft wird mit dem erfindungsgemäßen Ankoppel-Assistenzsystem erreicht, dass der Fahrer beim Ankoppelvorgang eine Unterstützung erhält, die ihm ein einfaches und schnelles Ankoppeln ermöglicht, insbesondere entfällt die schwierige individuelle Abschätzung einer optimalen Ankoppel-Trajektorie durch den Fahrer, wodurch insbesondere aufwendige Rangierkorrekturen vermeidbar sind.

Zusätzlich zu gegebenenfalls selbsttätigen Lenkeingriffen kann das System automatisch oder auf Fahrerfreigabe während des Rangiervorgangs durch Steuerung der entsprechenden Stellelemente das Fahrzeug die optimale Solltrajektorie automatisch abfahren.

Der Fahrer kann das Ankoppel-Assistenzsystem manuell zum Beispiel über einen Schalter aktivieren. Zweckmäßig weist das Ankoppel-Assistenzsystem alternativ oder zusätzlich ein Steuergerät auf mit einem Aktivierungs-Algorithmus, der die Absicht des Fahrers erkennt, einen Ankoppelvorgang durchzuführen. Diese Absicht kann insbesondere dadurch erkannt werden, dass durch Auswertung des Videobildmaterials ein Anhänger/Auflieger im Rückraum des Zugfahrzeugs festgestellt wird und/oder ein Rückwärtsgang eingelegt wird. Bei diesen Bedingungen wird das Ankoppel-Assistenzsystem zur Berechnung der Ankoppel-Trajektorie aktiviert und dem Fahrer wird die optimale Ankoppel-Trajektorie mitgeteilt. Das Ankoppel-Assistenzsystem kann damit sowohl automatisch durch den Algorithmus, aber auch manuell durch den Fahrer über eine Eingabevorrichtung aktiviert werden.

Für die Berechnung der optimalen Ankoppel-Trajektorie als Solltrajektorie werden die bekannten kinematischen Daten des Zugfahrzeugs verwendet sowie die aus dem Bildmaterial erfassten Daten für die Position, die Breite und die Drehung des Anhängers/Aufliegers. Im Falle eines Anhängers wird zudem die Position einer Deichsel und Zugöse verwendet.

Das Ankoppel-Assistenzsystem weist eine Vermittlungseinheit in einem Fahrerhaus des Zugfahrzeugs auf, mit der die Solltrajektorie dem Fahrer mitgeteilt wird.

Mit einer solchen Vermittlungseinheit kann dem Fahrer die Solltrajektorie schematisch auf einem Display oder als Overlay in einem Videobild der Kamera oder als Overlay in einem Top-View Bild auf einem Display angezeigt werden. Gegebenenfalls können dabei die Kamerabilder für einen besseren Eindruck der rückwärtigen Umgebung geeignet entzerrt werden.

In einer weiteren Ausgestaltung können zusätzlich weiter ermittelte Informationen eingeblendet und angezeigt werden, insbesondere der Abstand vom Zugfahrzeugende zum Anhänger/Auflieger und/oder die aus dem aktuellen Lenkwinkeleinschlag berechnete Istrajektorie.

Weiter kann zusätzlich zu einer Solltrajektorie in einem realen Videobild ein virtuelles 3D-Modell des Zugfahrzeugs eingeblendet werden, wobei entweder das ganze Modell oder nur der hintere Teil des Zugfahrzeugs sichtbar ist.

Die Vermittlungseinheit kann dem Fahrer die Einhaltung der Solltrajektorie mittels akustischer und/oder optischer und/oder haptischer Signale übermitteln. Eine geeignete akustische Signalübermittlung durch eine Tonsignalabgabe kann dergestalt realisiert werden, dass ein rechtsseitiger oder linksseitiger Lautsprecher im Fahrerhaus entsprechend einer für einen optimalen Ankoppelvorgang erforderlichen rechtsseitigen oder linksseitigen Lenkeinschlagkorrektur angesteuert wird. In einer weiteren Ausgestaltung kann zudem durch eine zugeordnete veränderbare Intensität und/oder Frequenz des Tonsignals dem Fahrer die Größe des erforderlichen Lenkeinschlags vermittelt werden.

Für eine optische Signalübermittlung kann vorteilhaft ein Sichtstreifen, insbesondere ein LED-Sichtstreifen so angesteuert werden, dass er dem Fahrer notwendige Lenkbewegungen zur Einhaltung der Solltrajektorie vermittelt. Ein solcher Sichtstreifen kann als separate Einheit oder in einem Display eingeblendet bzw. angeordnet werden.

Anhand einer Zeichnung wird die Erfindung weiter erläutert.

Die einzige Figur zeigt eine schematische Draufsicht auf ein Nutzfahrzeuggespann 1 mit einem Zugfahrzeug 2 und einem Anhänger 3. Der Anhänger 3 steht hinter dem Zugfahrzeug 2 seitlich links versetzt und in einem Winkel zum Zugfahrzeug 2 für eine Ankopplung bereit. Für die Ankopplung ist es erforderlich eine Zugöse 4 an einer Deichsel des Anhängers 3 in ein Kupplungsmaul 6 am rückwärtigen Ende des Zugfahrzeugs 2 einzuführen.

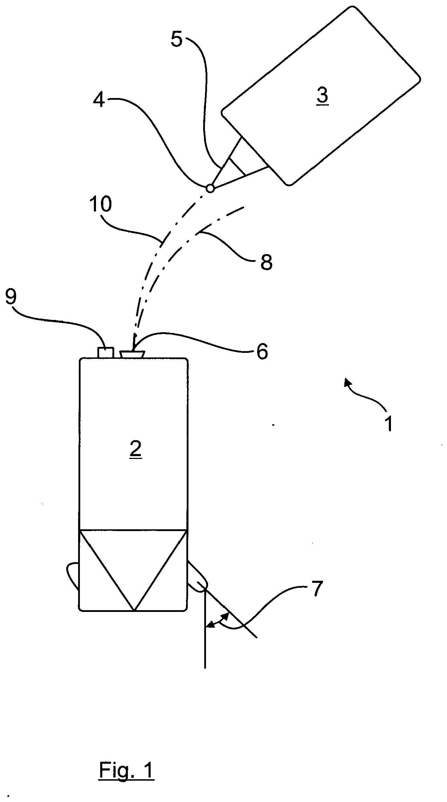

Das Zugfahrzeug 2 nähert sich in Fig. 1 bereits mit einer Rückwärtsfahrt dem Anhänger 3 mit einem eingeschlagenen Lenkwinkel 7. Das erfindungsgemäße Ankoppel-Assistenzsystem berechnet aus dem aktuellen Lenkwinkel 7 eine aktuelle Isttrajektorie 8. Ersichtlich wird bei einer weiteren Rückfahrt mit dem aktuellen Lenkwinkel 7 vom Kupplungsmaul 6 die Zugöse 4 am Anhänger 3 verfehlt.

Am Zugfahrzeug 2 ist im rückwärtigen Bereich eine Sensorik mit einer Videokamera 9 angeordnet, welche so ausgerichtet ist, dass sie den Anhänger 3 und insbesondere die Zugöse 4 mit den Abmessungen und der aktuellen Lage erfassen kann. Durch Auswertung des Videobildmaterials mittels Bildverarbeitungsalgorithmen wird eine optimale Ankoppel-Trajektorie als optimale Solltrajektorie 10 berechnet. Bei Einhaltung dieser Solltrajektorie 10 werden bei der Rückwärtsfahrt in einem Zug das Kupplungsmaul 6 und die Zugöse 4 ineinander geführt.

Die Darstellung in Fig. 1 kann einer schematischen Darstellung auf einem Display einer Vermittlungseinheit in einem Fahrerhaus entsprechen, wobei der Fahrer für einen optimalen Ankoppelvorgang eine Übereinstimmung der Isttrajektorie 8 mit der Solltrajektorie 10 durch eine geeignete Lenkwinkelkorrektur herbeiführen muss. Die Isttrajektorie 8 und die Solltrajektorie 10 werden während des gesamten Annäherungsvorgangs für jede Relativposition berechnet und angezeigt, so dass der Fahrer erforderliche Lenkkorrekturen auch während der Rückwärtsfahrt sukzessiv anpassen und durchführen kann.

Zudem können dem Fahrer zur Einhaltung der Solltrajektorie gegebenenfalls weitere optische und/oder akustische und/oder haptische Signale übermittelt werden.

### Bezugszeichenliste

- 1: Nutzfahrzeuggespann
- 2: Zugfahrzeug
- 3: Anhänger
- 4: Zugöse
- 5: Deichsel
- 6: Kupplungsmaul
- 7: Lenkwinkel
- 8: Isttrajektorie
- 9: Videokamera
- 10: Solltrajektorie

## Patentansprüche

1. Kamerabasiertes Fahrerassistenzsystem eines Zugfahrzeugs, insbesondere eines Zugfahrzeugs eines Nutzfahrzeuggespanns,
mit wenigstens einer am Zugfahrzeug (2) nach rückwärts gerichteten Kamera (9), wobei das Fahrerassistenzsystem als Ankoppel-Assistenzsystem ausgebildet ist und zur Unterstützung eines Ankoppelvorgangs mit der wenigstens einen Kamera (9) ein hinter dem Zugfahrzeug (2) abgestellter Anhänger/Auflieger (3) mit der Lage seiner Ankoppelvorrichtung (4) erfasst wird,
wobei durch Auswertung des Videobildmaterials mittels Bildverarbeitungsalgorithmen eine optimale Ankoppel-Trajektorie als optimale Solltrajektorie (10) zwischen Zugfahrzeug (2) und Anhänger/Auflieger (3) berechnet wird, und
wobei das Assistenzsystem dem Fahrzeugführer die optimale Solltrajektorie (10) und/oder notwendige Lenkbewegungen zur Einhaltung der Solltrajektorie mitteilt und/oder dazu selbsttätige Lenkeingriffe ausführt,
**dadurch gekennzeichnet,**
**dass** mittels der Kamera (9) und durch Auswertung des Bildmaterials die Position, die Breite und die relative Drehung des anzukoppelnden Anhängers/Aufliegers (3) erfasst wird und im Falle eines Anhängers (3) zusätzlich die Position einer Zugöse (4) erfasst wird.

2. Kamerabasiertes Fahrerassistenzsystem nach Anspruch 1, **dadurch gekennzeichnet, dass** das Ankoppel-Assistenzsystem automatisch oder auf Fahrerfreigabe zusätzlich zur Querführung die Längsführung des LKW während des Rangiervorgangs durch Eingriffe in Motor, Bremse und Gang übernimmt.

3. Kamerabasiertes Fahrerassistenzsystem nach Anspruch 1 oder 2, **dadurch gekennzeichnet, dass** das Ankoppel-Assistenzsystem manuell durch den Fahrer aktivierbar ist und/oder ein Steuergerät mit einem Aktivierungs-Algorithmus aufweist, der die Absicht des Fahrzeugführers erkennt, einen Ankoppelvorgang durchzuführen, insbesondere indem mittels der wenigstens einen Kamera ein Anhänger/Auflieger (3) im rückwärtigen Bereich des Zugfahrzeugs (2) erkannt wird und/oder ein Rückwärtsgang eingelegt wird.

4. Kamerabasiertes Fahrerassistenzsystem nach einem der Ansprüche 1 bis 3, **dadurch gekennzeichnet, dass** aus den kinematischen Daten des Zugfahrzeugs (2) und aus den erfassten Daten für die Position, die Breite und die Drehung des Anhängers/Aufliegers (3) sowie im Falle eines Anhängers (3) für die Position einer Zugöse (4) die optimale Ankoppel-Trajektorie als Solltrajektorie (10) für den Ankoppelvorgang berechnet wird.

5. Kamerabasiertes Fahrerassistenzsystem nach einem der Ansprüche 1 bis 4, **dadurch gekennzeichnet, dass** das Ankoppel-Assistenzsystem eine Vermittlungseinheit in einem Fahrerhaus des Zugfahrzeugs (2) aufweist, mit der die Solltrajektorie (10) dem Fahrer mitgeteilt wird.

6. Kamerabasiertes Fahrerassistenzsystem nach Anspruch 5, **dadurch gekennzeichnet, dass** mit der Vermittlungseinheit dem Fahrer die Solltrajektorie (10) schematisch auf einem Display oder als Overlay in einem Videobild der Kamera (9) oder als Overlay in einem Top-View Bild auf einem Display angezeigt wird, wobei gegebenenfalls die Kamerabilder für einen besseren Eindruck der rückwärtigen Umgebung geeignet entzerrt werden.

7. Kamerabasiertes Fahrerassistenzsystem nach Anspruch 6, **dadurch gekennzeichnet, dass** zusätzlich weitere ermittelte Informationen eingeblendet und angezeigt werden, insbesondere der Abstand vom Zugfahrzeugende zum Anhänger/Auflieger (3) und/oder die aus dem aktuellen Lenkwinkeleinschlag (7) berechnete Isttrajektorie (8).

8. Kamerabasiertes Fahrerassistenzsystem nach Anspruch 5 oder Anspruch 6, **dadurch gekennzeichnet, dass** zusätzlich zu einer Solltrajektorie (10) in einem realen Videobild ein virtuelles 3D-Modell des Zugfahrzeugs (2) eingeblendet wird, wobei entweder das ganze Modell oder nur der hintere Teil des Zugfahrzeugs (2) sichtbar ist.

9. Kamerabasiertes Fahrerassistenzsystem nach einem der Ansprüche 5 bis 8, **dadurch gekennzeichnet, dass** die Vermittlungseinheit dem Fahrer die Einhaltung der Solltrajektorie (10) mittels akustischer und/oder optischer und/oder haptischer Signale übermittelt.

10. Kamerabasiertes Fahrerassistenzsystem nach Anspruch 9, **dadurch gekennzeichnet,**
**dass** für eine akustische Signalübermittlung durch eine Tonsignalabgabe ein rechtsseitiger oder linksseitiger Lautsprecher angesteuert wird je nach einer für einen optimalen Ankoppelvorgang erforderlichen rechtsseitigen oder linksseitigen Lenkeinschlagkorrektur, und
**dass** gegebenenfalls durch eine zugeordnete veränderbare Intensität und/oder Frequenz des Tonsignals dem Fahrer die Größe des erforderlichen Lenkeinschlags vermittelt wird.

11. Kamerabasiertes Fahrerassistenzsystem nach Anspruch 9 oder Anspruch 10, **dadurch gekennzeichnet, dass** für eine optische Signalübermittlung ein Sichtstreifen, insbesondere ein LED-Sichtstreifen so angesteuert wird, dass er dem Fahrer notwendige Lenkbewegungen zur Einhaltung der Solltrajektorie vermittelt, wobei der Sichtstreifen separat oder in einem Display angeordnet sein kann.

12. Fahrzeug, insbesondere Nutzfahrzeug, mit einem kamerabasierten Fahrerassistenzsystem nach einem der vorhergehenden Ansprüche.

## Claims

1. Camera-based driver assistance system for a traction vehicle, in particular for a traction vehicle of a combination of commercial vehicles,
having at least one camera (9) which is directed rearwards on the traction vehicle (2),
wherein the driver assistance system is embodied as a coupling assistance system and in order to assist a coupling process a trailer/semi-trailer (3) which is positioned behind the traction vehicle (2) is acquired with respect to the position of its coupling device (4) with the at least one camera (9),
wherein by evaluating the video image material by means of image processing algorithms an optimum coupling trajectory is calculated as an optimum target trajectory (10) between the traction vehicle (2) and the trailer/semi-trailer (3), and
wherein the assistance system communicates to the vehicle driver the optimum target trajectory (10) and/or necessary steering movements to maintain the target trajectory and/or carries out automatic steering interventions with respect thereto,
**characterized**
**in that** the position, the width and the relative rotation of the trailer/semi-trailer (3) to be coupled is acquired by means of the camera (9) and by evaluating the image material and in addition the position of a towing eye (4) is acquired in the case of a trailer (3).

2. Camera-based driver assistance system according to Claim 1, **characterized in that** the coupling assistance system automatically, or when enabled by the driver, assumes, in addition to the lateral guidance, the longitudinal guidance of the lorry during the manoeuvring process by interventions in the engine, brakes and gear speed.

3. Camera-based driver assistance system according to Claim 1 or 2, **characterized in that** the coupling assistance system can be activated manually by the driver and/or has a control unit with an activation algorithm which detects the intention of the vehicle driver to carry out a coupling process, in particular **in that** a trailer/semi-trailer (3) is detected in the area behind the traction vehicle (2) by means of the at least one camera and/or a reverse gear speed is engaged.

4. Camera-based driver assistance system according to one of Claims 1 to 3, **characterized in that** the optimum coupling trajectory is calculated as a target trajectory (10) for the coupling process from the kinematic data of the traction vehicle (2) and from the acquired data for the position, the width and the rotation of the trailer/semi-trailer (3), and in the case of a trailer (3) for the position of a towing eye (4).

5. Camera-based driver assistance system according to one of Claims 1 to 4, **characterized in that** the coupling assistance system has a communication unit in a driver's cab of the traction vehicle (2), with which communication unit the target trajectory (10) is communicated to the driver.

6. Camera-based driver assistance system according to Claim 5, **characterized in that** with the communication unit the target trajectory (10) is displayed schematically to the driver on a display or as an overlay in a video image of the camera (9) or as an overlay in a top view image on a display, wherein, if appropriate, the camera images are suitably equalized for a better impression of the surroundings to the rear.

7. Camera-based driver assistance system according to Claim 6, **characterized in that** in addition further determined information is included and displayed, in particular the distance from the end of the traction vehicle to the trailer/semi-trailer (3) and/or the actual trajectory (8) which is calculated from the current steering angle lock (7).

8. Camera-based driver assistance system according to Claim 5 or Claim 6, **characterized in that** in addition to a target trajectory (10), a virtual 3D model of the traction vehicle (2) is included in a real video image, wherein either the entire model or only the rear part of the traction vehicle (2) can be seen.

9. Camera-based driver assistance system according to one of Claims 5 to 8, **characterized in that** the communication unit informs the driver that the target trajectory (10) is complied with, by means of acoustic and/or visual and/or haptic signals.

10. Camera-based driver assistance system according to Claim 9, **characterized**
**in that** a right-hand side or left-hand side loudspeaker is actuated for an acoustic signal communication, by means of a sound signal output, depending on a right-side or left-side steering lock correction which is necessary for an optimum coupling process, and
**in that**, if appropriate, the magnitude of the necessary steering lock is communicated to the driver by means of an assigned variable intensity and/or frequency of the sound signal.

11. Camera-based driver assistance system according to Claim 9 or Claim 10, **characterized in that** a viewing strip, in particular an LED viewing strip, is actuated for optical communication of signals in such a way that it informs the driver of necessary steering movements for maintaining the target trajectory, wherein the viewing strip can be arranged separately or in a display.

12. Vehicle, in particular commercial vehicle, having a camera-based driver assistance system according to one of the preceding claims.

## Revendications

1. Système d'assistance au conducteur à base de caméra d'un véhicule tracteur, notamment d'un véhicule tracteur d'un attelage de véhicule utilitaire, comprenant au moins une caméra (9) orientée vers l'arrière sur le véhicule tracteur (2), le système d'assistance au conducteur étant réalisé sous la forme d'un système d'assistance à l'attelage et une remorque/semi-remorque (3) à l'arrêt derrière le véhicule tracteur (2) étant capturée avec l'au moins une caméra (9) avec la position de son dispositif d'attelage (4) en vue de l'assistance à une opération d'attelage,
une trajectoire d'attelage optimale étant calculée sous la forme d'une trajectoire de consigne optimale (10) entre le véhicule tracteur (2) et la remorque/semi-remorque (3) en interprétant le matériel des images vidéo au moyen d'algorithmes de traitement d'images, et le système d'assistance communiquant au conducteur du véhicule la trajectoire de consigne optimale (10) et/ou les mouvements de direction nécessaires pour maintenir la trajectoire de consigne et/ou exécutant des interventions de direction automatiques à cet effet,
**caractérisé en ce que**
la position, la largeur et la rotation relative de la remorque/semi-remorque (3) à atteler sont capturées au moyen de la caméra (9) et par interprétation du matériel d'image, et dans le cas d'une remorque (3), la position d'un oeillet de traction (4) est en plus capturée.

2. Système d'assistance au conducteur à base de caméra selon la revendication 1, **caractérisé en ce que** le système d'assistance à l'attelage prend en plus en charge, automatiquement ou sur validation du conducteur, en vue du guidage transversal, le guidage longitudinal du poids-lourd pendant la manoeuvre par des interventions dans le moteur, les freins et le rapport de transmission.

3. Système d'assistance au conducteur à base de caméra selon la revendication 1 ou 2, **caractérisé en ce que** le système d'assistance à l'attelage peut être activé manuellement par le conducteur et/ou possède un contrôleur avec un algorithme d'activation qui reconnaît l'intention du conducteur du véhicule de réaliser une opération d'attelage, notamment par le fait qu'une remorque/semi-remorque (3) est reconnue dans la zone vers l'arrière du véhicule tracteur (2) au moyen de l'au moins une caméra et/ou qu'une marche arrière est engagée.

4. Système d'assistance au conducteur à base de caméra selon l'une des revendications 1 à 3, **caractérisé en ce que** la trajectoire d'attelage optimale en tant que trajectoire de consigne (10) pour l'opération d'attelage est calculée à partir des données cinématiques du véhicule tracteur (2) et à partir des données acquises pour la position, la largeur et la rotation de la remorque/semi-remorque (3) et aussi, dans le cas d'une remorque (3), pour la position d'un billet de traction (4).

5. Système d'assistance au conducteur à base de caméra selon l'une des revendications 1 à 4, **caractérisé en ce que** le système d'assistance à l'attelage possède, dans une cabine de conducteur du véhicule tracteur (2), une unité de communication à l'aide de laquelle la trajectoire de consigne (10) est communiquée au conducteur.

6. Système d'assistance au conducteur à base de caméra selon la revendication 5, **caractérisé en ce que** l'unité de communication permet d'afficher la trajectoire de consigne (10) à l'attention du conducteur schématiquement sur un écran ou sous la forme d'une superposition dans une image vidéo de la caméra (9) ou sous la forme d'une superposition dans une image vue de dessus sur un écran, les images de la caméra étant éventuellement corrigées de manière appropriée pour une meilleure impression de l'environnement à l'arrière.

7. Système d'assistance au conducteur à base de caméra selon la revendication 6, **caractérisé en ce que** des informations déterminées supplémentaires sont incrustées et affichées, notamment l'écart entre le véhicule tracteur et la remorque/semi-remorque (3) et/ou la trajectoire réelle (8) calculée à partir du braquage angulaire de direction actuel (7).

8. Système d'assistance au conducteur à base de caméra selon la revendication 5 ou la revendication 6, **caractérisé en ce qu'**un modèle 3D virtuel du véhicule tracteur (2) est incrusté dans une image vidéo réelle en plus d'une trajectoire de consigne (10), le modèle complet ou seule la partie arrière du véhicule tracteur (2) étant visible.

9. Système d'assistance au conducteur à base de caméra selon l'une des revendications 5 à 8, **caractérisé en ce que** l'unité de communication communique au conducteur le maintien de la trajectoire de consigne (10) au moyen de signaux sonores et/ou visuels et/ou haptiques.

10. Système d'assistance au conducteur à base de caméra selon la revendication 9, **caractérisé en ce**
**que** pour une communication sonore du signal par l'émission d'un signal audio, un haut-parleur du côté droit ou du côté gauche est commandé en fonction d'une correction du braquage de la direction vers la droite ou vers la gauche qui est nécessaire pour une opération d'attelage optimale, et
**que** l'importance du braquage de direction nécessaire est éventuellement communiquée au conducteur par une intensité et/ou une fréquence variable associée du signal audio.

11. Système d'assistance au conducteur à base de caméra selon la revendication 9 ou la revendication 10, **caractérisé en ce que** pour une communication visuelle du signal, une bande lumineuse, notamment une bande lumineuse à LED est commandée de telle sorte qu'elle communique au conducteur les mouvements de direction nécessaires pour le maintien de la trajectoire de consigne, la bande lumineuse pouvant être disposée séparément ou dans un écran.

12. Véhicule, notamment véhicule utilitaire, équipé d'un système d'assistance au conducteur à base de caméra selon l'une des revendications précédentes.
